# EUROPÄISCHE PATENTSCHRIFT

(11) **EP 0 410 310 B1**
(45) Veröffentlichungstag und Bekanntmachung des Hinweises auf die Patenterteilung: **26.01.1994**
(21) Anmeldenummer: 90113892.5
(22) Anmeldetag: 20.07.1990
(51) Int. Cl.: B29D 30/36

(54) **Verfahren und Vorrichtung zur Herstellung eines Reifenrohlings auf einer Bombierstufe**
Method of and apparatus for building a tyre carcass during the expansion stage
Procédé pour la fabrication d'une carcasse de pneu pendant la phase d'expansion et dispositif pour sa mise en oeuvre

(30) Priorität: 28.07.1989 DE 3925083
(43) Veröffentlichungstag der Anmeldung: 30.01.1991
(73) Patentinhaber: Continental Aktiengesellschaft, 30165 Hannover (DE)
(72) Erfinder: Sergel, Horst, Dipl.-Ing., D-3000 Hannover 51 (DE); Golombek, Horst, Dipl.-Ing., D-3003 Ronnenberg 3 (DE); Bartsch, Friedrich, D-3057 Neustadt 1 (DE)

(56) Entgegenhaltungen:
- EP-A- 0 000 423
- US-A- 3 493 454

## Beschreibung

Die Erfindung betrifft ein Verfahren zum Herstellen eines Reifenrohlings auf einer Bombierstufe, die ein Spannkopfsystem mit zwei drehbaren und axial verfahrbaren einteiligen Wulsthaltescheiben aufweist. Die Erfindung betrifft weiterhin eine Vorrichtung zur Durchführung des Verfahrens gemäß Oberbegriff des Anspruchs 4.

Bei der Herstellung eines Reifenrohlings im Rahmen einer Zwei-Stufen-Fertigung wird zunächst eine Reifenkarkasse auf einer Wickeltrommel gewickelt und mit den Wulstkernen und Kernprofilen versehen. Der solchermaßen gefertigte zylindrische Karkaßkörper wird anschließend auf einer Bombierstufe in eine torusförmige Gestalt gebracht und dabei mit dem Gürtelpaket verbunden.

Bei bekannten Rohlingsherstellungsverfahren wird der vorgefertigte Karkaßkörper zwischengelagert und anschließend bei der Bombierstufe von Hand aufgesteckt. Es sind im wesentlichen zwei Arten von Bombierstufen bekannt. Bei der ersten Art sind Nutenspannköpfe oder Hakenspannköpfe vorhanden, die mit segmentierten Wulsthaltescheiben ausgestattet sind. Bei ihnen können die Segmente so weit zusammengefahren werden, daß das Aufstecken der Karkasse gerade erfolgen kann. Es besteht der Nachteil eines sehr hohen Fertigungsaufwandes für die Segmente und ihre Steuerung. Darüber hinaus bewirken Lücken zwischen den Segmenten Abdrücke am Reifenrohling.

Bei der weiterhin bekannten Art, z.B. EP-A - 0000423, auf welcher die Oberbegriffe der Ansprüche 1 und 4 basieren, sind Spannköpfe mit einteiligen starren, axial verfahrbaren Scheiben versehen. Hierbei besteht der Nachteil, daß das Aufstecken der Karkasse zwingend von Hand erfolgen muß, und zwar schräg zu den Wulsthaltescheiben. Darüber hinaus müssen die Haltescheiben sehr nahe zusammengefahren werden, um eine Montagemöglichkeit für den Karkaßkörper zu schaffen. Dies bedingt große Verfahrwege für die Scheiben und damit einen höheren Zeitaufwand für den Bombiervorgang.

Der Erfindung liegt deshalb die Aufgabe zugrunde, ein Verfahren anzugeben, das ein automatisches Aufstecken der Karkasse erlaubt und eine Vorrichtung zu schaffen, die eine möglichst robuste und einfach aufgebaute Karkaßaufnahme aufweist.

Diese Aufgabe wird erfindungsgemäß dadurch gelöst, daß die Wulsthaltescheiben um eine Achse senkrecht zu ihrer Rotationsachse verschwenkt werden, daß ein im wesentlichen zylindrischer Karkaßkörper konzentrisch zur Rotationsachse der Wulsthaltescheiben auf diese aufgeschoben wird, daß anschließend die Wulsthaltescheiben in ihre Position vertikal zur Rotationsachse zurückgeschwenkt werden und daß nach dem Aufspannen der Karkasse diese in ein Gürtelpaket hineinbombiert wird. Eine Vorrichtung zur Durchführung des Verfahrens ist dadurch gekennzeichnet, daß die ringförmigen Wulsthaltescheiben je um eine Achse senkrecht zu ihrer Rotationsachse verschwenkbar sind.

Mit der Erfindung wird eine einfache automatische Zuführung der Karkaßkörper ermöglicht. Es kann gegebenenfalls auf eine Zwischenlagerung der Karkaßkörper verzichtet werden. Gegenüber bekannten Vorrichtungen ergeben sich kurze Verfahrwege für die Haltescheiben und damit eine Zeitersparnis bei der Rohlingsbombierung. Der Kerngedanke der Erfindung besteht darin, für ein einfaches Aufbringen des im wesentlichen zylindrischen Karkaßkörpers auf die Wulsthaltescheiben diese um Achsen senkrecht zu ihrer Rotationsachse zu verschwenken und den Karkaßkörper dann konzentrisch zur Rotationsachse der Wulsthaltescheiben aufzubringen. Durch das Verschwenken der Wulsthaltescheiben wird ihre Projektionsfläche verkleinert, so daß der Karkaßkörper, der beim Aufbringen in einer Richtung leicht oval verformt wird, problemlos die Wulsthaltescheiben überwinden kann. Dieses Überwinden ist sogar bei relativ weit auseinanderliegenden Wulsthaltescheiben möglich. Somit müssen nach dem Zurückschwenken der Wulsthaltescheiben diese zum Aufspannen der Karkasse nur noch geringfügig auseinandergefahren werden, was zu einer nicht unerheblichen Zeiteinsparung beim Bombiervorgang führt.

Nachfolgend wird ein Ausführungsbeispiel einer erfindungsgemäßen Vorrichtung anhand einer Zeichnung erläutert und anschließend das Verfahren beschrieben.
- Fig. 1: zeigt ein Spannkopfsystem mit zwei schwenkbaren Wulsthaltescheiben in einer Seitenansicht, die Wulsthaltescheiben im Schnitt,

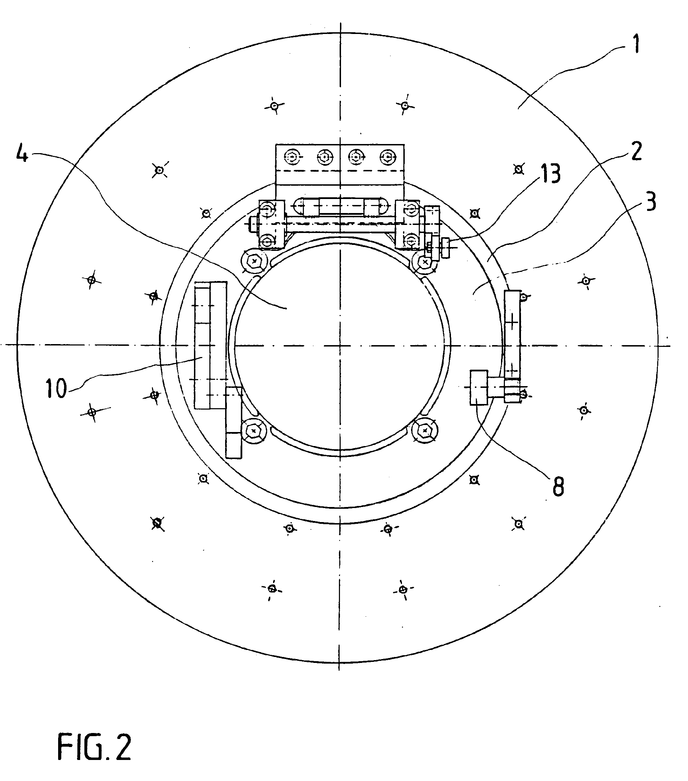

- Fig. 2: zeigt einen Schnitt in der Ebene A-A,
- Fig. 3: zeigt die Vorrichtung der Fig. 1, jedoch mit geschwenkten Wulsthaltescheiben.

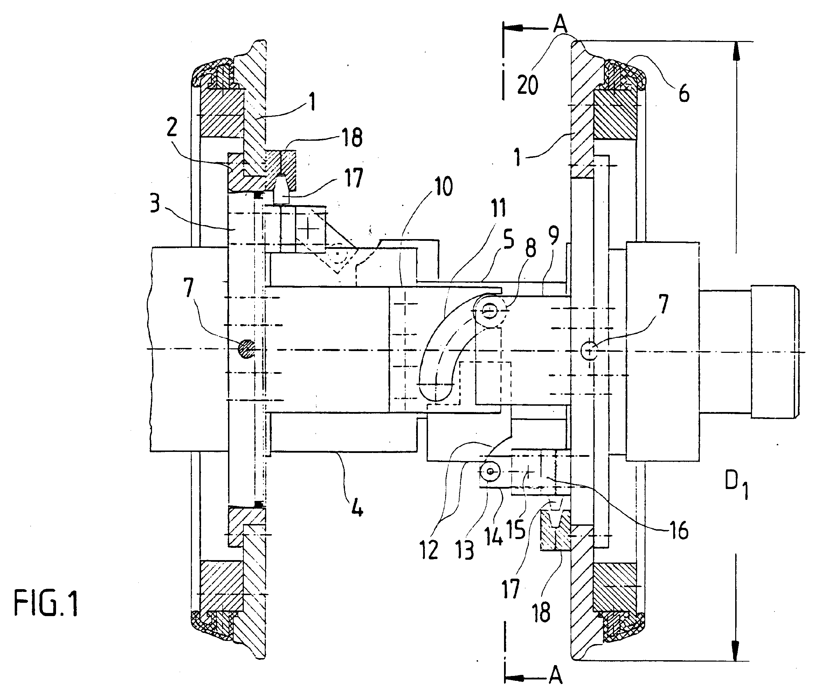

Die Vorrichtung gemäß Fig. 1 zum Bombieren einer Karkasse in ein Gürtelpaket zeigt ein Spannkopfsystem mit zwei einteiligen Wulsthaltescheiben 1. Die Wulsthaltescheiben 1 befinden sich auf zwei Schwenkscheiben 2. Diese sind schwenkbar auf zwei Festscheiben 3 montiert, die auf zwei Wellen 4, 5 befestigt sind, die konzentrisch relativ zueinander verschiebbar sind. Jede der Wulsthaltescheiben 1 trägt am radial und axial äußeren Umfang einen aufblasbaren Haltebalg 6 zum Fixieren der Rohlingswülste. Um Reifenrohlinge verschiedener Dimensionen herstellen zu können, sind die Wulsthaltescheiben 1 auswechselbar an den Schwenkscheiben 2 befestigt, die um je eine Achse 7 relativ zu den Festscheiben 3 verschwenkbar sind. Jede Wulsthaltescheibe 1 weist auf der der anderen Scheibe zugekehrten Seite eine Kurvenrolle 8 auf, die mittels eines Flansches 9 an der jeweiligen Wulsthaltescheibe 1 befestigt ist. Auf Höhe der Kurvenrolle 8 befindet sich ein Kurvenblech 10 mit einer Schwenkkurve 11, das an der gegenüberliegenden Festscheibe 3 befestigt ist. An jedem Kurvenblech 10 befindet sich weiterhin eine Arretierkurve 12, die eine Arretierrolle 13 betätigt. Die Arretierrollen 13 befinden sich auf je einem Hebelarm 14, der an einer Welle 15 montiert ist, die an einem mit der Festscheibe 3 verbundenen Flansch 16 gelagert ist. Beim Einfahren der Kurvenrolle 8 in den geraden Teil der Schwenkkurve 11 gerät die Arretierrolle 13 in Wirkverbindung mit der Arretierkurve 12, wobei die Welle 15 gedreht wird und dabei einen Verriegelungskeil 17 zwischen Festscheibe 3 und einem Verriegelungsflansch 18 an der Wulsthaltescheibe 1 löst.

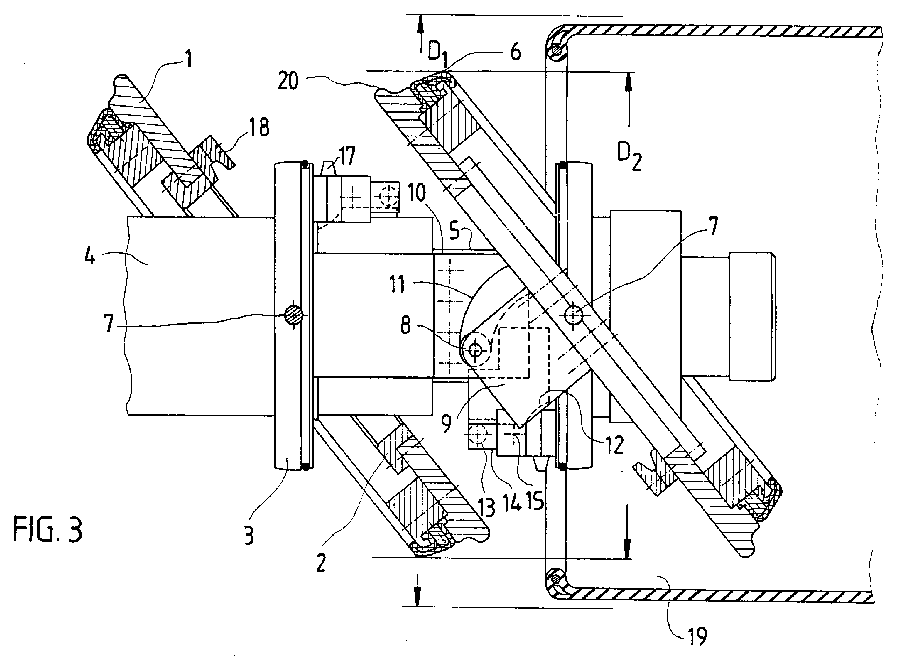

Nachfolgend wird das erfindungsgemäße Verfahren beschrieben. Es wird von einer Stellung der Vorrichtung gemäß Fig. 1 ausgegangen. Sie zeigt die Vorrichtung im axial zusammengefahrenen Zustand der Wulsthaltescheiben 1 bei unverschwenkten Scheiben. Zur Beschickung der Vorrichtung mit einer gewickelten Karkasse werden die beiden Wulsthaltescheiben 1 in ihre Endstellung verschwenkt. Dies geschieht in der Weise, daß die beiden Scheiben 1 relativ aufeinander zugefahren werden. Dabei greifen die Kurvenrollen 8 in die Schwenkkurven 11 ein und die Arretierrollen 13 nähern sich den Arretierkurven 12. In einem bestimmten Punkt des Bewegungsablaufs treten die Arretierrollen 13 in Eingriff mit den Arretierkurven 12 und sorgen für eine Entriegelung der Verriegelungskeile 17 zwischen den Festscheiben 3 und den Wulthaltescheiben 1. Nach der Entriegelung führen die Kurvenrollen 8 ihre Bewegung in den Schwenkkurven 11 fort und die Wulsthaltescheiben 1 verschwenken sich um einen Winkel von ca. 45° in ihre Endstellung (Fig. 3). Nunmehr ist die Beschickposition erreicht. In ihr ist statt des Durchmesser D₁ der Wulsthaltescheiben 1 nur noch der Durchmesser D₂ der Projektionsfläche (Kurzachse eines Ovals) wirksam.

Eine Karkasse 19 wird in einem oval zusammengedrückten Zustand im Wulstbereich in einer Stellung senkrecht zu den Wellen 4, 5 über das freie Ende der Vorrichtung herangeführt und über die verschwenkten Wulsthaltescheiben 1 hinübergeschoben. Dabei verläuft die Längsachse des Ovals im Wulstbereich parallel zu den Achsen 7. Anschließend wird die Karkasse 19 aus dem ovalen Zustand in den runden Zustand zurückgeführt und mittels bekannter Mittel in diesem Zustand gehalten. Danach erfolgt bezüglich der Wulsthaltescheiben 1 eine Schwenkbewegung im umgekehrten Sinne, bis die Wulsthaltescheiben 1 wieder ihre Ausgangsstellung erreicht haben und verriegelt sind. Im Anschluß hieran fahren die Wulsthaltescheiben 1 noch weiter axial auseinander in den sogenannten Streckzustand, bei dem die Wülste der Karkasse 19 von den Hörnern 20 der Wulsthaltescheiben 1 erfaßt werden und die Karkasse 19 gestreckt und dabei zentriert und aufgespannt wird.

Anschließend wird die Haltevorrichtung für die Karkasse 19 entfernt. Danach erfolgt der übliche Bombiervorgang, bei dem in bekannter Weise die Karkasse 19 mit Druckluft beaufschlagt wird und die Wulsthaltescheiben 1 mit den aufgespannten Wülsten zusammenfahren. Dabei wird die Karkasse 19 in das (nicht gezeichnete) Gürtelpaket hineinbombiert. Vor Erreichen des Umkehrpunktes der Axialkraft im Aufspannbereich der Wülste werden die Haltebälge 6 expandiert, um ein Abspringen der Wülste zu verhindern. Anschließend wird der Bombiervorgang zu Ende geführt, so daß sich als Endzustand der fertige Reifenrohling ergibt. Hierauf werden die Haltebälge 6 zusammengezogen. Eine übliche Vorrichtung erfaßt den Rohling von außen. Danach werden die beiden Wulsthaltescheiben 1 wieder axial zusammengefahren, wobei der oben beschriebene Schwenkmechanismus einsetzt. Nach Erreichen der Endstellung wird der Reifenrohling mittels der bekannten Vorrichtung über die beiden Wulsthaltescheiben 1 hinweggezogen und einer Vulkanisiervorrichtung zugeführt. In dem verschwenkten Zustand der Wulsthaltescheiben 1 wiederholt sich der gesamte Vorgang, indem die nächste Karkasse 19 in der beschriebenen Weise aufgelegt wird.

Es sollte angemerkt werden, daß das beschriebene Verschwenken der Wulsthaltescheiben außer mit Kurvenrollen und Kurvenblechen selbstverständlich auch mit anderen Steuermitteln erfolgen kann. Die Antriebe für die einzelnen Bewegungsabläufe können pneumatisch oder auf andere Weise funktionieren. Die Mittel für das Beaufschlagen der Haltebälge 6 und der Karkasse 19 mit Druckluft wurden im einzelnen nicht beschrieben, da sie in bekannter Weise ausgebildet sein können.

## Patentansprüche

1. Verfahren zum Herstellen eines Reifenrohlings auf einer Bombierstufe, die ein Spannkopfsystem mit zwei drehbaren und axial verfahrbaren einteiligen Wulsthaltescheiben (1) aufweist, **dadurch** **gekennzeichnet**, daß die Wulsthaltescheiben (1) um eine Achse (7) senkrecht zu ihrer Rotationsachse verschwenkt werden, daß ein im wesentlichen zylindrischer Karkaßkörper (19) konzentrisch zur Rotationsachse der Wulsthaltescheiben (1) auf diese aufgeschoben wird, daß anschließend die Wulsthaltescheiben (1) in ihre Position vertikal zur Rotationsachse zurückgeschwenkt werden und daß nach dem Aufspannen der Karkasse (19) diese in ein Gürtelpaket hineinbombiert wird.

2. Verfahren nach Anspruch 1, dadurch gekennzeichnet, daß die Wulsthaltescheiben (1) um ca. 45° verschwenkt werden.

3. Verfahren nach Anspruch 1, dadurch gekennzeichnet, daß der Karkaßkörper (19) während des Aufschiebens auf die verschwenkten Wulsthaltescheiben (1) oval verformt wird.

4. Vorrichtung zur Durchführung des Verfahrens nach Anspruch 1 mit einem Spannkopfsystem mit zwei drehbaren und axial verfahrbaren einteiligen Wulsthaltescheiben (1), dadurch gekennzeichnet, daß die ringförmigen Wulsthaltescheiben (1) je um eine Achse (7) senkrecht zu ihrer Rotationsachse verschwenkbar sind.

5. Vorrichtung nach Anspruch 4, dadurch gekennzeichnet, daß die Schwenkachsen (7) für die beiden Wulsthaltescheiben (1) parallel zueinander verlaufen.

6. Vorrichtung nach Anspruch 4, dadurch gekennzeichnet, daß der Schwenkwinkel ca. 45° beträgt.

7. Vorrichtung nach Anspruch 4, dadurch gekennzeichnet, daß die Wulsthaltescheiben (1) zur Abstellung auf unterschiedliche Reifendimensionen lösbar auf Schwenkscheiben (2) befestigt sind, die wiederum luftdicht auf an den Wellen (4, 5) befestigten Festscheiben (3) aufliegen und relativ zu letzteren verschwenkbar sind.

8. Vorrichtung nach Anspruch 4 und/oder 7, dadurch gekennzeichnet, daß jede der Festscheiben (3) ein Kurvenblech (10) mit einer Schwenkkurve (11) trägt, in die eine an der jeweils gegenüberliegenden Schwenkscheibe (2) befestigte Kurvenrolle (8) eingreift.

9. Vorrichtung nach Anspruch 4 oder 7, dadurch gekennzeichnet, daß die Schwenkscheibe (2) in ihrer Stellung senkrecht zur Rotationsachse (Wellen 4, 5) verriegelbar sind.

## Claims

1. Method of producing a tyre blank in an end-closing stage, which has a closing system provided with two rotatable and axially displaceable one-piece bead retaining discs (1), characterised in that the bead retaining discs (1) are pivoted about an axis (7) perpendicular to their axis of rotation, in that a substantially cylindrical carcase body (19) is slipped over the bead retaining discs (1) concentrically relative to the axis of rotation thereof, in that the bead retaining discs (1) are subsequently pivoted back into their position vertically relative to the axis of rotation, and in that the carcase (19) is inserted into a bundle of belts after it has been clamped in position.

2. Method according to claim 1, characterised in that the bead retaining discs (1) are pivoted through approx. 45°.

3. Method according to claim 1, characterised in that the carcase body (19) is shaped into an oval configuration whilst it is being slipped over the pivoted bead retaining discs (1).

4. Apparatus for accomplishing the method according to claim 1, having a closing system provided with two rotatable and axially displaceable one-piece bead retaining discs (1), characterised in that the annular bead retaining discs (1) are each pivotable about an axis (7) perpendicular to their axis of rotation.

5. Apparatus according to claim 4, characterised in that the pivot axes (7) for the two bead retaining discs (1) extend parallel to each other.

6. Apparatus according to claim 4, characterised in that the pivotal angle is approx. 45°.

7. Apparatus according to claim 4, characterised in that the bead retaining discs (1) are detachably mounted on pivot discs (2) for adaptation to variable tyre dimensions, said pivot discs in turn resting on fixed discs (3), mounted on the shafts (4, 5), in an air-tight manner and being pivotable relative to said fixed discs.

8. Apparatus according to claim 4 and/or 7, characterised in that each of the fixed discs (3) is provided with a cam plate (10) having a pivot cam (11), in which a cam roller (8) engages, which is mounted on the respective oppositely situated pivot disc (2).

9. Apparatus according to claim 4 or 7, characterised in that the pivot discs (2) are lockable in their position perpendicular to the axis of rotation (shafts 4, 5).

## Revendications

1. Procédé de production d'une ébauche de pneumatique à un étage de galbage qui comprend un système à tête tendeuse à deux disques monobloc rotatifs (1) de retenue des talons qui sont déplaçables axialement, caractérisé en ce que les disques (1) de retenue des talons sont inclinés autour d'un axe (7) perpendiculaire à leur axe de rotation, en ce qu'un corps sensiblement cylindrique de carcasse (19) est enfilé sur les disques (1) de retenue des talons concentriquement à l'axe de rotation de ces derniers, en ce qu'ensuite les disques (1) de retenue des talons sont ramenés à leur position à laquelle ils sont verticaux sur l'axe de rotation et en ce qu'après mise sous tension de la carcasse (19), celle-ci subit un galbage à l'intérieur d'un structure ceinturée.

2. Procédé selon la revendication 1, caractérisé en ce que les disques (1) de retenue des talons subissent une inclinaison d'environ 45°.

3. Procédé selon la revendication 1, caractérisé en ce que le corps de carcasse (19) est déformé de manière qu'il soit ovale pendant qu'il est enfilé sur les disques inclinés (1) de retenue des talons.

4. Dispositif pour la mise en oeuvre du procédé selon la revendication 1, comprenant un système à tête tendeuse à deux disques monobloc rotatifs (1) de retenue des talons qui sont déplaçables axialement, caractérisé en ce que chacun des disques annulaires (1) de retenue des talons est inclinable autour d'un axe (7) perpendiculaire à son axe de rotation.

5. Dispositif selon la revendication 4, caractérisé en ce que les axes (7) d'inclinaison des deux disques (1) de retenue des talons sont parallèles.

6. Dispositif selon la revendication 4, caractérisé en ce que l'angle d'inclinaison est d'environ 45°.

7. Dispositif selon la revendication 4, caractérisé en ce que les disques (1) de retenue des talons sont fixés de manière amovible sur des disques inclinables (2) pour permettre la réalisation de pneumatiques de dimensions différentes, ces disques inclinables (2) reposant de leur côté de manière hermétique sur des disques fixes calés sur les arbres (4, 5) et étant inclinables par rapport à ces disques fixes.

8. Dispositif selon la revendication 4 et/ou 7, caractérisé en ce que chacun des disques fixes (3) supporte une tôle (10) comportant une came d'inclinaison (11) dans laquelle pénètre un galet de came (3) fixé sur le disque inclinable opposé (2).

9. Dispositif selon la revendication 4 ou 7, caractérisé en ce que les disques inclinables (2) sont verrouillables à leur position perpendiculaire à leur axe de rotation (arbres 4, 5).
